# EUROPEAN PATENT APPLICATION

(11) **EP 4 449 861 A1**
(43) Date of publication of application: **23.10.2024**
(21) Application number: 24168933.0
(22) Date of filing: 08.04.2024
(51) Int. Cl.: A01K 1/03

(54) **VETERINARY ENCLOSURE SYSTEM**

(30) Priority: 11.04.2023 GB 202305304
(71) Applicant: CASCO Europe Limited, Horsham West Sussex RH12 3JR (GB)
(72) Inventor: BUBEAR, Matthew, c/o CASCO Europe Limited, Lawson Hunt Industrial Park, Horsham, RH12 3JY (GB)
(74) Representative: Windsor, Louise

(57) **Abstract**

A veterinary enclosure (1) system for an animal such as a small mammal;

the veterinary enclosure (1) system comprising at least one animal housing (3) wherein the or each housing (3) comprises at least one moveable door (5), wherein the or each door (5) is moveable between a closed position covering an opening into the housing (3) and an open position allowing access to the inside of the housing (3);

wherein the or each door (5) comprises at least one ventilation aperture (7);

and the veterinary enclosure (1) system further comprises at least one attachment member (60) for securing a veterinary accessory to the or each housing (3) without preventing movement of the or each door (5) between the closed and the open position and, wherein in the open position, the or each attachment member (60) does not obstruct the opening to the inside of the enclosure (1, 3).

## Description

The present invention relates to a veterinary enclosure for a small mammal.

It is common in veterinary practices or veterinary hospitals for small mammals, such as cats; dogs; rodents including rats, mice, gerbils, guinea pigs and other small mammals such as rabbits and hedgehogs to be kept in enclosures when they are being treated or recovering from treatment. Known enclosures usually comprise cages arranged in a stack or bank. Each cage has a mesh door that allows air to flow into the cage and also allows the animal to be seen. For animal use, such metal cages are hardwearing, and the mesh door allows a user to attach a clipboard to the mesh; for example, to record patient medical records. The mesh door also allows the veterinary practitioner to pass intravenous therapy (IV) equipment through the mesh if this is required to treat the animal. For example, if an animal patient is receiving IV therapy, a bag of intravenous fluid hangs from a hook that is supported on a wheeled stand or tripod outside of the cage and the IV tubing/line passes from the bag through the mesh of the cage door to the animal patient.

However, although such cages are durable they have been found to be heavy, noisy and to block light. This is problematic when the cages are stacked, and particularly when a significant number of animals are housed in multiple stacked cages. It is known that toughened glass enclosures improve the appearance of a clinical veterinary practice and also that they allow enhanced visibility by letting in natural light.

However, there remains a problem if veterinary accessories, such as clipboards with patient notes or IV lines obscure the door to the enclosure. If the animal feels trapped in the enclosure because they are unable to see out of the enclosure door, or accessories prevent light entering the enclosure then this can increase animal anxiety and so be detrimental to recovery. Furthermore, in the event of emergency any obstructions preventing access to the animal through the door of the enclosure can delay treatment when time is critical. It has also been found that for veterinary practitioners, accessories that are floor mounted around the enclosure or loosely attached to the cage door can result in a trip hazard and increase the risk of an accident, particularly when working in conditions where space is restricted.

The present invention sets out to provide an improved veterinary enclosure, which addresses the above-described problems.

In one aspect, the invention provides a veterinary enclosure system for an animal such as a small mammal; the veterinary enclosure system comprising at least one animal housing wherein the or each housing comprises at least one moveable door, wherein the or each door is moveable between a closed position covering an opening into the housing and an open position allowing access to the inside of the housing; wherein the or each door comprises at least one ventilation aperture; and the veterinary enclosure system further comprises at least one attachment member for securing a veterinary accessory to the or each housing without preventing movement of the or each door between the closed and the open position and, wherein in the open position, the or each attachment member does not obstruct the opening to the inside of the enclosure.

Preferably, the or each ventilation aperture is circular. Optionally, the or each ventilation aperture is rectangular or square.

Preferably, the or each ventilation aperture has a polished surface.

The veterinary enclosure system of the present invention is a modular system that is a significant improvement over known, stacked cage systems. The present invention has been carefully configured to offer functionality and flexibility for housing multiple animals in a treatment space, such as a veterinary practice or veterinary hospital. The system improves conditions for animal recovery and improves safety by offering a secure environment for recovery and treatment. Furthermore, the system offers a safer working environment for clinical staff/veterinary practitioners. By providing an attachment member/s for securing a veterinary accessory the system improves the efficiency and safety of treatment. Any accessories are securely held and positioned predominantly away from the door of the housing, which reduces the risk of the animal patient's view being obstructed. It has been found that small mammals, such as dogs and cats can have increased anxiety when they cannot see their surroundings. Most importantly, in the event of an emergency the attachment member/s of the present invention ensures that quick and efficient access can be achieved without any accessories or fixing means blocking the opening to the inside of the enclosure. The present invention allows the door to be quickly, conveniently and safely opened, without accessories needing to first be detached and removed.

Preferably, the at least one attachment member is removably fixed to the veterinary enclosure system.

Preferably, the or each attachment member comprises at least one hook.

More preferably, the or each attachment member comprises at least one utility hook. More preferably, the or each attachment member comprises at least one multi-purpose hook.

Preferably, the veterinary enclosure system comprises a plurality of attachment members. More preferably, the veterinary enclosure system comprises at least two hooks.

Preferably, the or each hook is removably attached to the or each animal housing.

Optionally, the or each hook is fixed to the or each animal housing.

Preferably, the or each hook is L-shaped. Optionally, the or each hook is U-shaped.

Preferably, the or each hook comprises a first horizontal arm protruding from the or each animal housing and a second vertical arm substantially perpendicular to the first arm.

It is understood that in the context of the present invention, "horizontal" means in a direction substantially parallel to the floor on which the veterinary enclosure system is positioned and "vertical" means in a direction substantially perpendicular to the floor and substantially parallel to the walls of the building housing the system.

Preferably, the or each attachment member comprises at least one hook and further comprises a detachable vertical support arm. More preferably, the or each attachment member comprises at least one hook and further comprises a detachable vertical support arm having a connector at a first end and a holder at a distal end thereof.

Preferably, the connector is a female connector to mate with the second vertical arm of the hook.

Optionally, the connector is a push-fit connector; or a screw-fit connector.

Preferably, the veterinary enclosure system comprises at least one control panel.

Preferably, the or each attachment member is attachable to the or each control panel.

A hook attachment member removably secured to the housing allows for veterinary accessories, such as IV-lines to be connected safely and securely to the housing. The detachable vertical support can be conveniently attached to the housing when an animal patient requires intravenous (IV) treatment so that a separate IV stand is not required. Rather, an IV bag is held external to the housing at a height above the patient and is secured to the housing, while the IV line passes into the housing without obstructing the opening/doorway into the housing.

Preferably, the or each attachment member comprises a fastener, preferably an elongate fastener, which is securable through a ventilation aperture, to the moveable door.

Preferably, the fastener is secured through the ventilation aperture to the moveable door by a securing means on the opposite face of the door to the accessory mounted thereon. For example, the securing means is a push-fit or clip-fit connector. Alternatively, the securing means is resiliently-biased to hold the elongate fastener in place.

Preferably, the fastener comprises a threaded bolt and a threaded nut; more preferably a threaded winged nut.

Preferably, the or each attachment member further comprises a pair of washers.

Preferably, the attachment member further comprises a pair of substantially annular rings, wherein each of the first and second substantially annular rings comprises a concentric circular aperture therein, and wherein the pair of substantially annular rings are removably connected by the fastener. Preferably, wherein the fastener is secured to the substantially annular rings by a threaded nut.

Optionally, the attachment member further comprises a pair of rectangular frames.

Preferably, the first annular ring comprises a substantially cylindrical protrusion. Preferably, the second annular ring comprises an annular protrusion.

Optionally, the substantially cylindrical protrusion of the first annular ring sits inside the annular protrusion of the second annular ring when the pair of substantially annular rings are connected to each other by the fastener, wherein the fastener passes through the concentric circular apertures of each annular ring.

In the context of this invention, the pair of annular rings are understood to be flat, thin annular members that ensure a tight fit between the attachment member and the respective ventilation aperture through which the attachment member is secured to the moveable door. The accessory connected to the attachment member is securely held to the door (on the outer face of the door) and the annular rings also ensure that the ventilation aperture is fully covered, which prevents the risk of the animal being caught in any small gaps created between the accessory holder and the ventilation aperture.

The attachment member of the present invention is carefully configured so that the attachment member can be used with ventilation holes of different diameters/sizes whilst ensuring that the attachment member is safely and securely held; for example, if the door of the housing is opened or closed. The attachment member is used to hold valuable and relatively heavy equipment, such as an infusion pump. The system of the present invention offers a veterinary practice the flexibility to move accessories between different housings to meet the needs of each animal patient.

Preferably, the or each attachment member further comprises an accessory holder; for example, an accessory holder to support an infusion pump.

Preferably, the accessory holder comprises a clamp. More preferably, the accessory holder further comprises a hand-operable clamp.

Preferably, the accessory holder comprises a cylindrical bar for supporting an infusion pump.

Preferably, the cylindrical bar is stainless steel.

Preferably, the accessory holder comprises a sealing sheet; preferably, a planar sealing sheet; preferably, an acrylic planar sealing sheet; more preferably, a transparent acrylic sheet for sealing the or each ventilation hole of a door.

Preferably, the sealing sheet is a transparent sealing sheet.

Preferably, the sealing sheet has substantially similar dimensions to a door of the housing.

Preferably, the sealing sheet comprises at least one fixing aperture positioned proximal to at least one corner of the sealing sheet. More preferably, the sealing sheet comprises three fixing apertures each positioned proximal to a corner of the sealing sheet.

Preferably, the accessory holder comprises at least one pipe connector and/or at least one valve and/or a at least one pipe joint.

The present invention uses the same attachment member to removably attach a range of accessories to an animal housing and provides a user with the option to install the required accessories in the most convenient position for use; for example, above the door of the housing or to the door of the housing. Thus, veterinary practices are not required to install multiple different types of housing, which may or may not be required in patient treatment. For example, the veterinary enclosure system of the present invention allows a veterinary practitioner to convert the housing into a sealed oxygen housing if the animal patient requires treatment with oxygen. The distress to the animal of being moved to a permanent oxygen chamber is avoided and the cost and complexity of providing oxygen therapy, if required, are reduced. A user can efficiently convert the standard housing using an acrylic sheet to seal the door and a barbed bulkhead oxygen pipe connection to deliver oxygen into the sealed housing. If oxygen is no longer required, the animal can remain resting in the housing whilst the attachment members are removed, and the housing is converted to a standard recovery housing.

Preferably, the or each control panel comprises any one or more of: a heating control for controlling the temperature within the housing; a lighting control for controlling the light emitted within the housing; a ventilation control for controlling the ventilation to the housing.

Preferably, the or each control panel further comprises at least one power source.

Preferably, the veterinary enclosure system comprises a plurality of animal housings and a plurality of control panels, wherein each control panel is configured to control conditions within a single housing.

The present invention allows for conditions within each individual housing of a veterinary enclosure system to be controlled separately. In larger veterinary practices there may be a significant number of animal patients each with different recovery requirements or at different stages of treatment. The present invention allows a veterinary practitioner to provide the best conditions for treatment and recovery according to the needs of each patient.

Furthermore, the present invention has an environmental and economic benefit to the veterinary practitioner by allowing a reduction in energy use for heating, lighting and ventilation. The individual control panels allow a user to only provide heat, light and ventilation to housings that are in use. In large practices, rather than heating, lighting and ventilating an entire ward/stack of enclosures when the ward is not fully occupied, a user can select only to heat, light and ventilate the required individual animal housings by using the control panel for the required housing/s.

Preferably, the veterinary enclosure system comprises at least one wipe-clean board.

More preferably, the or each wipe-clean board further comprises a light; most preferably, the or each wipe-clean board is back-lit.

By providing a wipe clean board for a practitioner to record information, the present invention allows for medical notes and instructions to be clearly visible and associated with a respective housing. This avoids the need for clipboards/notes to be attached to obscure the opening to the housing. By recording information directly on the enclosure, the risk of errors in treatment is also reduced; for example, when instructions are missed or mis-placed. By illuminating the board for displaying patient information, notes can be recorded and viewed even in low light conditions reducing any disturbance to the animal patient/s housed in the enclosure.

Preferably, the or each door is made of toughened safety glass.

Preferably the or each housing and/or the or each door is made of toughened safety glass.

Preferably, the toughened safety glass has a thickness of between about 6mm and 10mm; more preferably, the toughened safety glass has a thickness of about 8mm.

The toughened safety glass enclosure is significantly quieter than traditional stainless-steel cages, which improves the working environment for veterinary practitioners and also aids animal recovery. Furthermore, the toughened safety glass enclosure can be conveniently cleaned to provide a hygienic environment for animal treatment and recovery. The toughened safety glass is also strong and secure enough to allow the modular system of the present invention to be stacked so that even with a stack of units and animals contained therein the system is stable and secure.

Preferably, the or each door comprises at least one cover layer; preferably, at least one translucent cover layer; more preferably, a vinyl cover layer.

By applying a vinyl cover layer that diffuses light entering the housing, the environment for an animal housed within the housing is calmer and so recovery is improved.

Preferably, the or each door further comprises at least one hinge; more preferably, the or each door comprises a pair of hinges.

Preferably, the or each hinge is resiliently-biased; more preferably, the or each hinge is spring-loaded.

Preferably, the or each door is lockable. More preferably, the or each door comprises a lock. Preferably, the or each door comprises a latch. More preferably, the or each door comprises a resiliently-biased latch.

Preferably, the or each housing is cuboidal.

Preferably, the veterinary enclosure system comprises a plurality of housings. Preferably, the animal enclosure system comprises a plurality of stackable housings.

The present invention is a modular system that can be conveniently adapted according to the requirements of a veterinary practice. The size and number of housings that are stacked in the veterinary enclosure system can be adapted according to the type and number of animals to be housed. The configuration of the modular system can be carefully planned to aid animal recovery and can be changed by reusing components.

Preferably, the or each housing has a width of between about 600mm and 1200mm

Preferably, the or each housing has a depth of between about 500mm and 900mm.

More preferably, the or each housing has a depth of about 700mm.

Preferably, the or each housing has a height of between about 400mm and 1100mm.

More preferably, the or each housing has a height of between about 400mm and 900mm.

It is understood that in the context of this invention the "height" of the housing is the dimension perpendicular to the floor and parallel to the walls of the treatment room; the "depth" of the housing is the dimension between the door of the enclosure and the rear wall of the enclosure; the "width" of the housing is the horizontal measurement perpendicular to the depth.

Preferably, the veterinary enclosure system further comprises a removable divider. More preferably, the veterinary enclosure system further comprises a slidable, removable divider.

Preferably, the divider is made of an anti-bacterial material.

The removable divider of the present invention allows a user to decide how many compartments they require depending on the animal patients that they need to house. For example, if an animal requires more space the divider can be removed to provide a single space within the enclosure. However, if less space is required and/or the user needs to house more animals, the divider can be inserted to create two compartments within the housing.

Preferably, the veterinary enclosure system comprises at least one base plinth. More preferably, the veterinary enclosure system comprises a base having at least four adjustable feet. More preferably, the veterinary enclosure system comprises screw-threaded, adjustable feet.

The present invention can be easily and safely installed, which is particularly important when the modular system comprises multiple housings that are stacked. The veterinary enclosure system may not necessarily be installed on a perfectly horizontal floor and so the adjustable feet allow the base of the enclosure to be adjusted to rest securely and ensure that the base is horizontal so that any animals enclosed in the housing/s are safe and comfortable.

Preferably, the or each door is substantially rectangular. More, preferably, the or each door is substantially rectangular and comprises one or more truncated corners.

By having the apex of at least one corner of a door replaced by a plane section, there is a triangular gap in the door that allows for tubing, such as tubing for an intravenous drip (IV line) to be fed through the door from the outside of the veterinary enclosure without the risk of the door crimping the line to prevent fluid flow or otherwise damaging the IV line. This allows for IV fluids to be administered to the animal patient without obstructing movement (i.e., opening and closing) of the door.

Preferably, the or each door comprises a plurality of ventilation apertures.

Preferably, the or each door comprises between about eight and sixteen ventilation apertures. More preferably, the or each door comprises about twelve ventilation apertures.

Preferably, the or each ventilation aperture is circular.

Preferably, the diameter of the or each ventilation aperture is between about 20mm and about 45mm.

The number of ventilation apertures and the size of each ventilation aperture is carefully configured to suit the animal to be housed within the veterinary enclosure housing. The number of apertures ensures that sufficient ventilation is provided. The size of the ventilation apertures allows air to enter the enclosure, whilst minimising the risk that an animal patient could climb or become caught in an aperture.

Preferably, the or each door further comprises a locking member. More preferably, the or each door comprises a resiliently-biased locking member.

Preferably, the or each door comprises a latch and the respective opening to the housing comprises a latch channel into which the latch is received in a locked configuration. More preferably, the or each door comprises a twistable latch and the respective opening to the housing comprises a latch channel into which the latch is received in a locked configuration.

To improve the security and ease of use of the veterinary enclosure system, the doors can be easily locked; for example, a user can secure the door in a locked position with one-handed operation.

Within this specification, the term "about" means plus or minus 20%; more preferably, plus or minus 10%; even more preferably, plus or minus 5%; most preferably, plus or minus 2%.

Preferably, the opening into the or each housing further comprises a door seal. More preferably, the door seal comprises an angled profile to prevent movement of the door inward into the housing.

The present invention reduces the risk of disturbance of a recovering animal patient by incorporating an angled seal around the opening of the housing to stop the door opening inwardly.

Preferably, the or each housing further comprises at least one channel along the base of the housing between the door and a rear wall of the housing.

The channel provided between the rear wall and the housing allows a user to insert a divider to separate compartments within the housing. The channel and the divider are configured so that the divider cannot be removed when the or each door is closed.

Preferably, the or each housing further comprises a fluid retention dam along at least one base edge of the housing; for example, the fluid retention dam is along the base edge of the opening of the housing. Optionally, the fluid retention dam is around substantially all of the perimeter of the base of the housing.

The fluid retention dam is a barrier to prevent the flow of fluid or loose solid materials to the outside of the housing or between compartments within the veterinary enclosure system. This is an important safety feature to improve the comfort of the animal patient and also to prevent cross-contamination between patients held within different housing compartments.

It is understood that the "veterinary" enclosure of the present invention is beneficial for use by veterinary practitioners treating animals, but the present invention can also be used by pet owners who are caring for animal patients.

For the purposes of clarity and a concise description, features are described herein as part of the same or separate embodiments; however, it will be appreciated that the scope of the invention may include embodiments having combinations of all or some of the features described.

The invention will now be described by way of example with reference to the accompanying drawings, in which: -
Figure 1 is a perspective view of the veterinary enclosure system in accordance with a first embodiment of the present invention;
Figure 2 is an enlarged perspective view of a corner and a hinge of the veterinary enclosure system shown in Figure 1;
Figure 3 is a perspective view of a vertically adjustable valance floor seal of the veterinary enclosure system shown in Figure 1;
Figure 4 is a perspective view of a control panel of the veterinary enclosure system shown in Figure 1;
Figure 5 is a perspective view of a control panel of the veterinary enclosure system shown in Figure 4 with a multi-purpose hook attached;
Figure 6 is a side view of the multi-purpose hook shown in Figure 5 with a detachable vertical support;
Figure 7 shows the accessory attachment member of the veterinary enclosure system shown in Figure 1;
Figure 8 shows the annular washer rings of the accessory attachment member shown in Figure 7 in a first configuration;
Figure 9 shows the annular washer rings of the accessory attachment member shown in Figure 7 in a second configuration;
Figure 10 shows an oxygen chamber door and an infusion pump holder attached to respective doors of housings of the veterinary enclosure system shown in Figure 1;
Figure 11 shows an enlarged perspective view of the infusion pump holder shown in Figure 10; and
Figure 12 shows a front view of an oxygen chamber door, an infusion pump holder and a multi-purpose hook used to secure an IV bag, which are all attached to a door of a housing of the veterinary enclosure system shown in Figure 1.

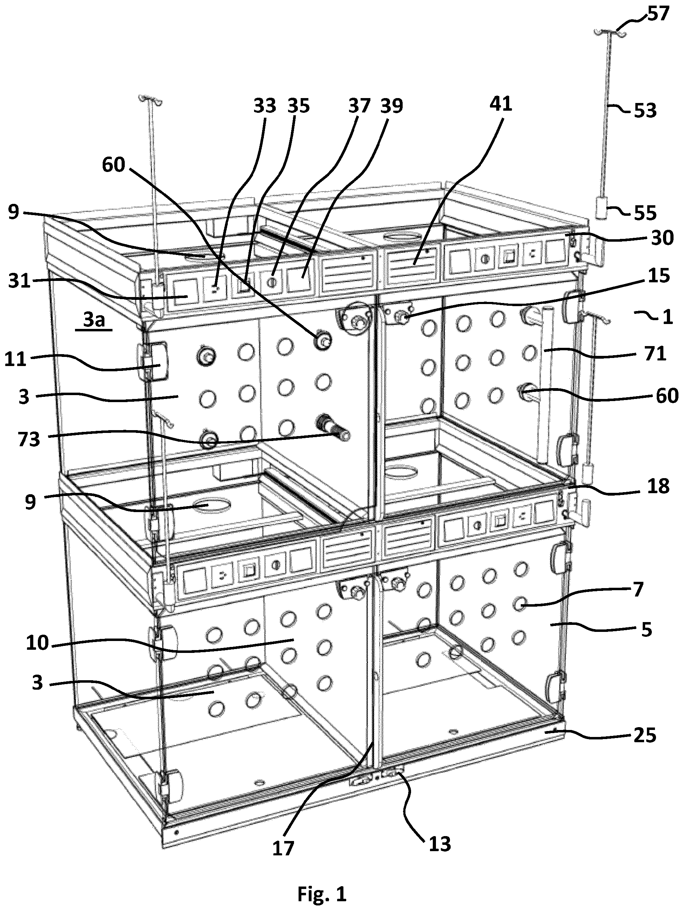

Referring to Figure 1, the veterinary enclosure system 1 of the present invention is shown and comprises four compartments or housings 3. In the embodiment shown each compartment/housing 3 has the same dimensions and is made of toughened safety glass having a beveled edge. There are two lower housings and two upper housings 3. In alternative configurations, there are housings of different sizes; for example, a walk-in housing for a large dog, which has a double height; and a smaller housing for a cat. The configuration of the present invention can be adapted to the animals that are to be housed and the available space in the treatment building.

Each housing 3, comprises a rectangular, movable door 5 and there are a plurality of circular, polished, ventilation apertures 7 through each movable door 5 with smooth edges to allow fresh air to flow through the housing. A ventilation extraction port 9 in each housing/compartment allows air to pass between housing compartments and to exit the enclosure system 1.

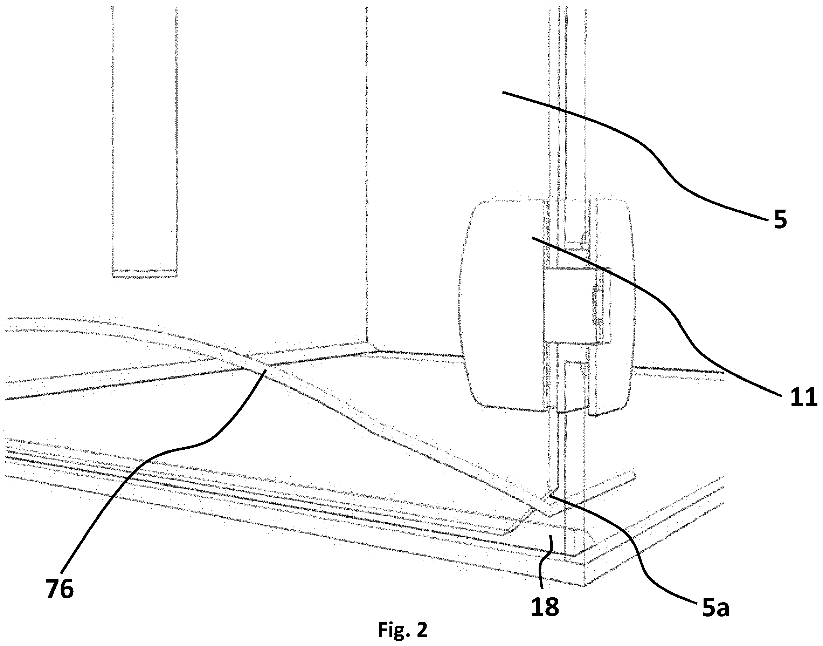

Referring to Figure 1 and Figure 2, each movable door 5 is mounted to an outer wall 3a of the housing 3 by a pair of stainless steel, sprung-loaded hinges 11. In a preferred embodiment of the present invention, each door 5 further comprises a translucent vinyl cover (not shown) to allow the animal to see out of the housing, whilst providing a calm environment for their recovery and/or treatment. Each door 5 is moveable between an open position and the closed position shown in Figure 1, wherein in a closed position the door 5 is secured by a latch 13. The latch 13 is spring-loaded and shown positioned on the base plinth of the enclosure 1. The latch allows for one-handed operation using a knurled handle 15, which can be turned either clockwise or anti-clockwise to release the latch 13. Each housing 3 also comprises an angled non-removal profile 17 that ensures the door 5 is sealed to the housing 3 and also prevents removal of the door 5 after installation. Furthermore, the angled non-removal profile 17 prevents the door 5 being able to move inward into the housing 3.

As shown in Figure, 2, each door 5 is substantially rectangular with truncated corners such that the apex of the corners of the door 5 is replaced by a plane section 5a so that a triangular gap is provided. The plane section 5a is approximately 20mm from the corner of the enclosure in which the door 5 sits, to allow for tubing to pass through the gap . Referring to Figure 2, the door 5 allows for tubing 76, such as tubing from an infusion pump to be fed through the door 5 from the outside of the veterinary enclosure 1 without the risk of the door crimping the tubing line 76 to prevent fluid flow or otherwise damaging the IV line.

As shown in Figures 1 and 2, each housing further comprises a fluid retention dam 18 along the base edge of the housing 3, which is an elongate member having a curved inward facing edge and a quadrant-shaped cross-sectional profile. In use, the door 5 rests against the fluid retention dam 18 when the door is in a closed position. In both an open and closed position, the fluid retention dam 18 is a barrier that prevents the flow of fluid or loose solid materials to the outside of the housing 3 or between compartments within the veterinary enclosure system 1. Each housing/compartment 3 further comprises at least one channel (not shown) along the base of the housing between the door 5 and a rear wall of the housing. A divider 10 can be inserted into the channel to separate compartments within the housing.

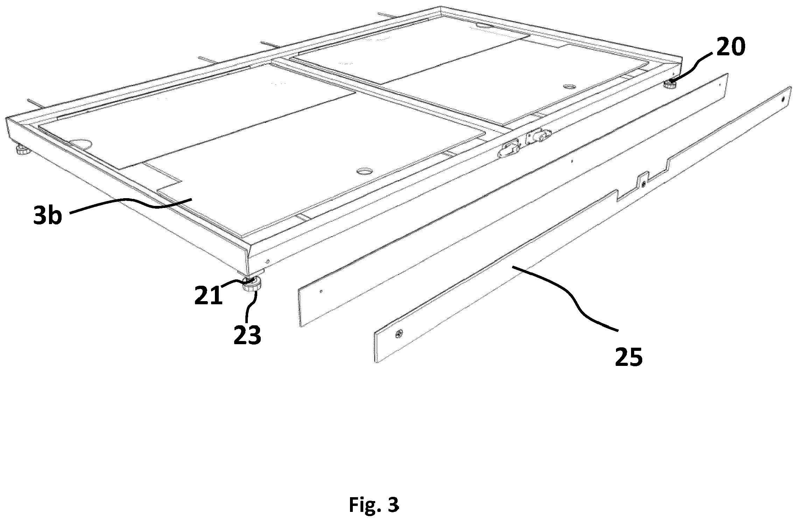

As shown in Figure 3, the veterinary enclosure system 1 is mounted on four adjustable feet 20, which are each adjustable so that the base 3b of each housing 3 is horizontal when the veterinary enclosure system 1 is resting securely on the floor of the treatment building. Each of the adjustable feet 20 is made of a non-porous, nylon material and comprises a levelling thread 21 and a levelling locking nut 23. In use, each foot is manually adjusted without the need for additional tooling. When the veterinary enclosure system has been levelled, a clip-fit vertically adjustable rubber valance floor seal 25 is pushed into place to conceal the feet 20 and to prevent dirt being drawn under the base 3b of the veterinary enclosure system 1.

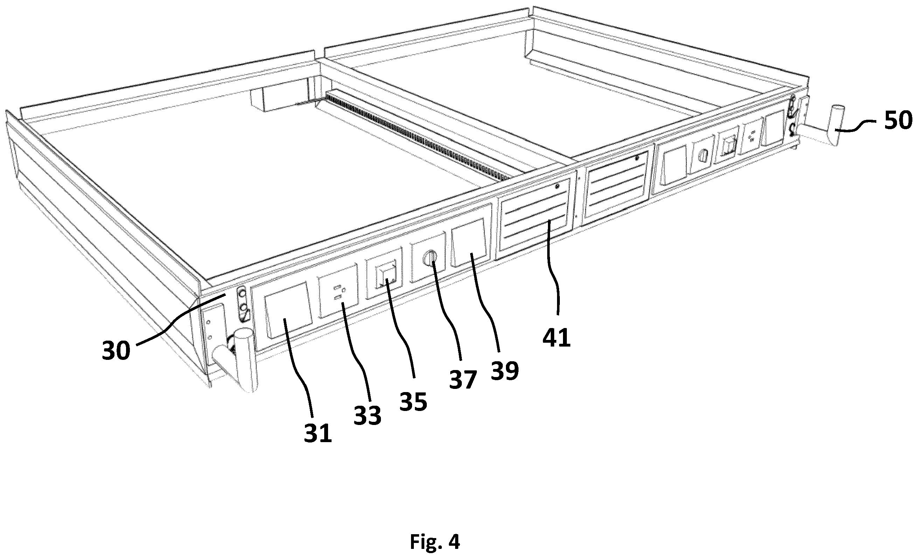

As shown in Figures 1 and 4, above each housing 3 is a control panel 30, which is removable and is made of powder coated aluminum. Each control panel independently controls conditions within an individual housing 3 within the veterinary enclosure system 1. The control panel 30 comprises an extraction fan switch 31 connected to an external extraction fan ducted to the veterinary enclosure system 1. The control panel 30 further houses a mains power outlet 33 that is used to provide easy access to a power supply and is configured according to the region of operation of the veterinary enclosure system 1. The control panel also includes a thermostatic temperature control switch 35, a lighting control switch 37 and a lighting on/off/dimmer switch 39 for each enclosure 3. The thermostatic temperature control switch 35 allows the heating system to each housing 3 to be switched on and off to control the temperature within the housing 3. The lighting control switch 37 is used to switch between different LED radiation sources to provide each enclosure with either daylight/white light, or red light to aid recovery or blue light to assist with cleaning of the housing. The further lighting on/off/dimmer switch 39 can be pressed once to turn the lighting within the housing 3 on or off and is pressed for a greater period of time to increase or decrease (dim) the light intensity. The control panel 30 also has a backlit whiteboard 41 for each housing 3, which is used to record information about the animal patient and can be wiped clean to remove information stored thereon. Each of the control 35, 37, 39 is arranged to control the lighting and heating within the housing 3 below. The present invention allows for independent control of the conditions within each housing 3 so that a user can best adapt the enclosure to the animal patient housed therein.

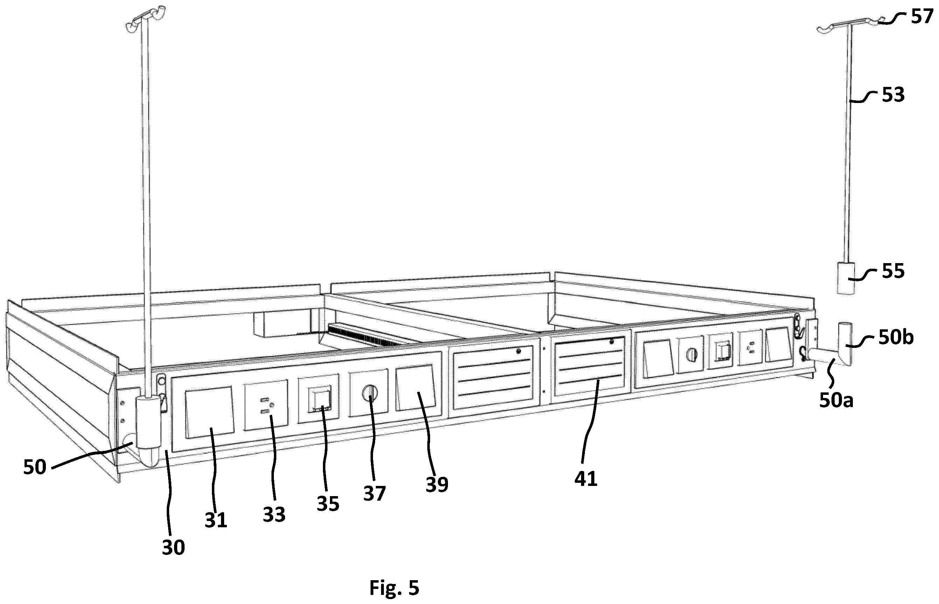

Referring to Figure 5, the veterinary enclosure system 1 further comprises a multi-purpose hook 50. In the embodiment shown in Figures 1 and 5, the system 1 comprises a hook 50 attached to each control panel 30. The hook 50 is removably attached to the control panel 30 and is L shaped with a first horizontal arm 50a protruding from the control panel 30 of the housing 3 and a second vertical arm 50b substantially perpendicular to the first arm 50a.

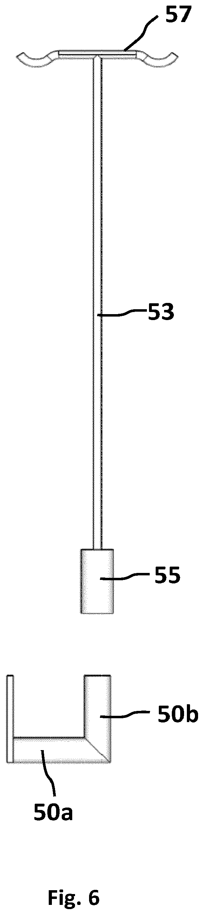

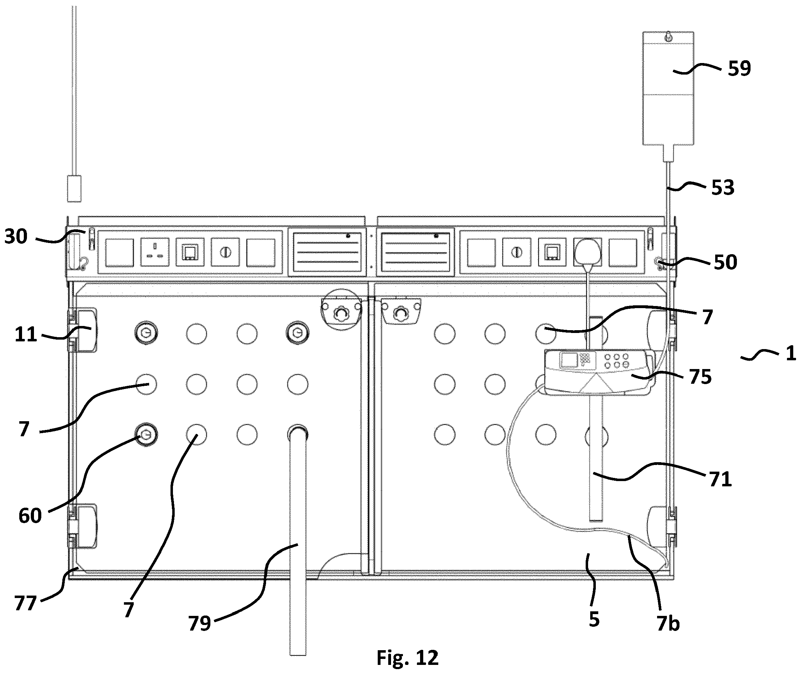

In the embodiment shown in Figures 5 and 6, a detachable vertical support 53 is connected to the hook 50. The vertical support 53 includes a connector 55 for connection to the hook 50 at a first end and a holder 57 at a distal end thereof. The connector 55 provides a gravity fit, removable connection to the multi-purpose hook 50. The holder 57 is to hold an IV fluid bag at a height above the housing 3 and so above an animal patient housed therein, as shown in Figure 12.

Referring to Figures 1, 7 and 10, the veterinary enclosure system 1 further comprises an accessory attachment member 60, which comprises an elongate fastener 61, which is securable through a ventilation aperture 7, to the moveable door 5. The elongate fastener is a threaded bolt 61 to mate with a threaded winged nut 63. The accessory attachment member 60 also comprises a pair of substantially annular washer rings 65a, 65b having a concentric circular aperture 66. In use, the pair of substantially annular rings 65a, 65b are removably connected by the threaded bolt 61 and secured by the threaded wing nut 63.

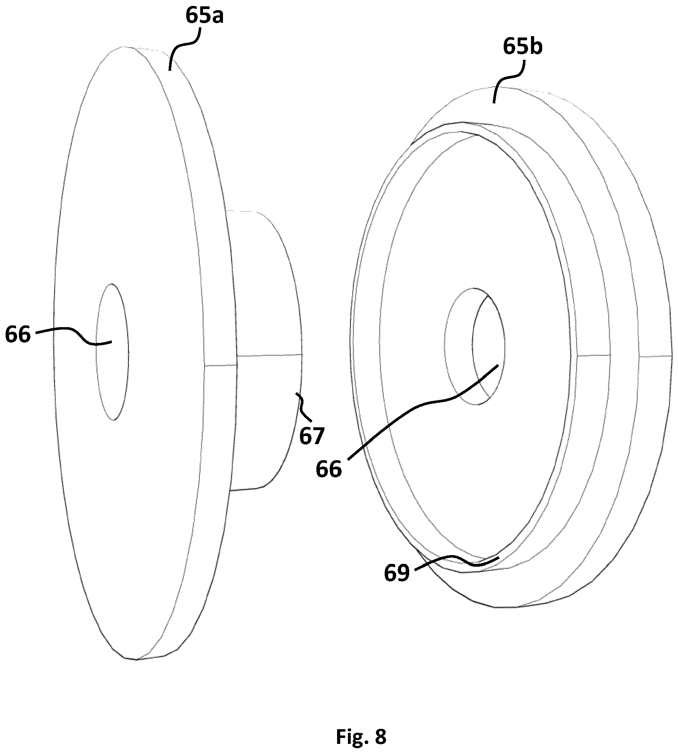

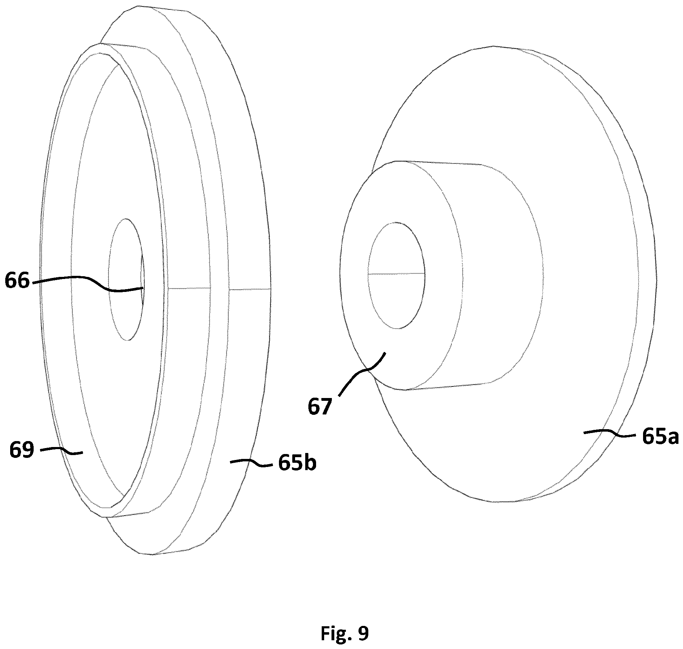

Referring to Figures 8 and 9, the first annular ring 65a comprises a substantially cylindrical protrusion 67. The second annular ring 65b comprises an annular protrusion 69.

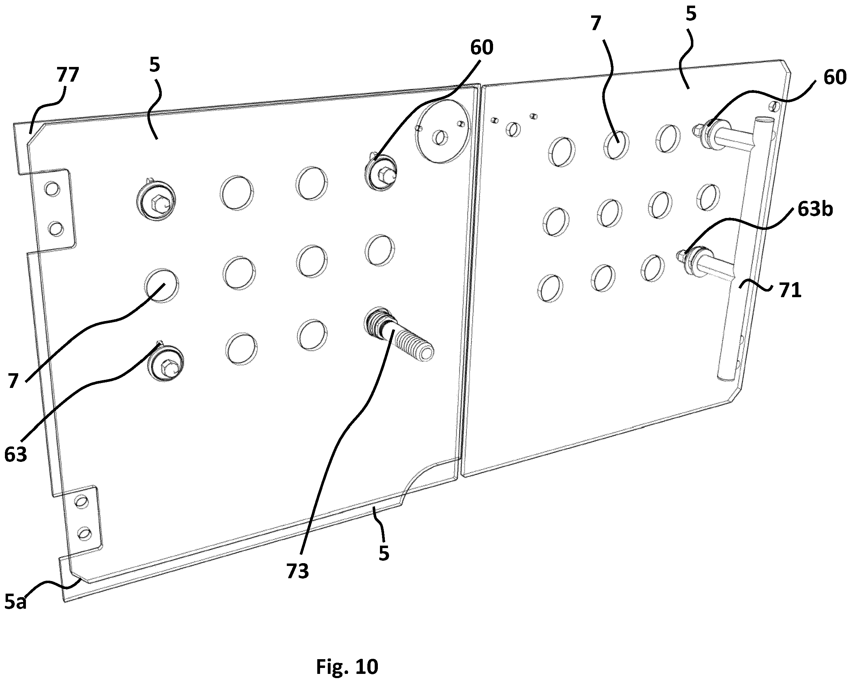

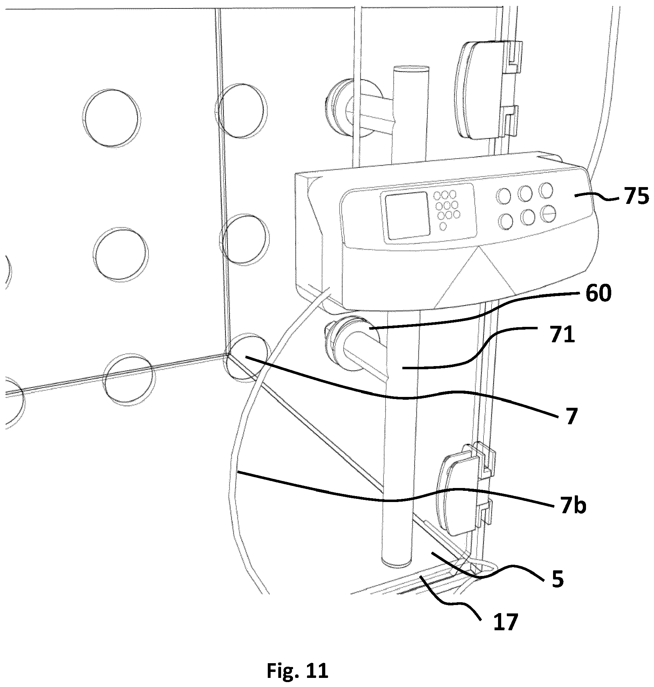

Referring to Figure 10, in use the accessory attachment member 60 connects a veterinary accessory holder 71 to the door 5 of the housing 3. Referring to Figures 11 and 12, the accessory holder 71 shown in Figure 10 is for securely supporting an infusion pump 75. The accessory holder 71 comprises a stainless-steel bar. The infusion pump 75 is used to deliver and control medication, nutrient solutions, saline solution etc. administered to the animal patient through infusion tubing 76. The infusion tubing 76 passes through the truncated corner of the door 5 from the infusion pump 75, which is securely connected to the door 5. If the door 5 is opened, the accessory attachment member 60, the accessory holder 71 and the infusion pump 75 remain attached and do not interfere with opening and closing of the door 5.

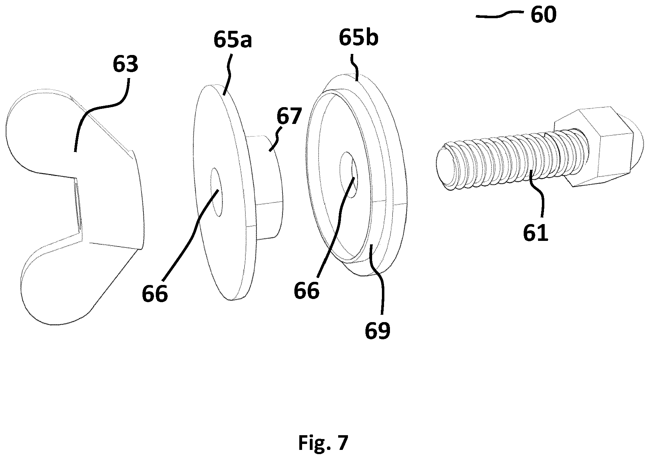

Referring to Figures 7, 8 and 9, the attachment member 60 can be used with ventilation apertures 7 of different sizes. For a door 5 having smaller ventilation apertures 7, the cylindrical protrusion 67 of the first annular ring 65a passes through the ventilation aperture 7 to the second annular ring 65b. If the attachment member 60 is used with a ventilation aperture 7 having a greater diameter, the first and second annular rings 65a, 65b are used in an alternative connection configuration, wherein the ventilation aperture 7 is covered by the annular protrusion 69 of the second annular ring 65b. Referring to Figure 10, in both orientations, the pair of substantially annular rings 65a, 65b are connected to each other through the door 5 by the threaded bolt (not shown), wherein the bolt passes through the concentric circular apertures of each annular ring and is secured by the threaded wing nut 63 or a hexagonal nut 63b, which can be tightened by hand.

Referring to Figure 10, the accessory attachment member 60 of the present invention can also be used to convert the housing 3 into a sealed oxygen chamber. A detachable, planar sealing sheet is used as an oxygen chamber door 77. For example, a transparent acrylic oxygen chamber door 77 is used. The oxygen chamber door 77 is substantially rectangular and covers the truncated corners 5a of the door 5 to prevent or reduce oxygen pumped into the housing 3 from escaping. The angled non-removal profile 17 also reduces the air space between the oxygen chamber door 77 and the door 5.

The same configuration of accessory attachment member 60 as previously described is used to attach the oxygen chamber door 77 to the door 5 through three of the ventilation apertures 7. Tubing 73 through which oxygen is pumped into the housing is secured through a fourth ventilation aperture 7. As previously described the oxygen chamber door 77 is attached to the door 5 of the housing 3 with a pair of substantially annular rings/washers 65a, 65b removably connected to each other by a threaded bolt 61. The threaded bolt 61 is secured through the ventilation aperture 7 by a threaded wing nut 63. The threaded bolt 61 passes through the concentric circular apertures of each annular ring 65a, 65b and is tightened by hand. Thus, the housing is a sealed oxygen chamber and oxygen can be pumped from oxygen inlet tubing 79 (see Figure 12) through the oxygen door tubing 73 when required. As shown in Figures 10 and 12, the oxygen door tubing 73 comprises a barbed end for providing a barbed bulkhead oxygen pipe connection to the oxygen inlet tubing 79. The view through the door 5 is not obstructed by the transparent oxygen chamber door 77 allowing the animal to see out of the housing and to allow a veterinary practitioner to see into the housing. If an oxygen chamber is no longer required, the oxygen door 77 can be removed by removing the threaded wing nuts 63 and the oxygen door tubing 73. In the event of an emergency or if access to the animal is required, the door 5 remains moveable between an open and a closed position with the oxygen chamber door 77 still attached.

Referring to Figure 12, the accessory attachment member 60, with accessory holder 71 attached, and the multipurpose hook 50 can be used simultaneously as required so that an IV bag 59 and an infusion pump 75 can be used with the same housing 3. Any of the housings 3 in a stacked veterinary enclosure system 1 can be used as an oxygen chamber adjacent to a housing 3 used with alternative veterinary accessories.

The above-described embodiment has been given by way of example only, and the skilled reader will naturally appreciate that many variations could be made thereto without departing from the scope of the claims.

## Claims

1. A veterinary enclosure system for an animal such as a small mammal;
the veterinary enclosure system comprising at least one animal housing wherein the or each housing comprises at least one moveable door, wherein the or each door is moveable between a closed position covering an opening into the housing and an open position allowing access to the inside of the housing;
wherein the or each door comprises at least one ventilation aperture; and the veterinary enclosure system further comprises at least one attachment member for securing a veterinary accessory to the or each housing without preventing movement of the or each door between the closed and the open position and,
wherein in the open position, the or each attachment member does not obstruct the opening to the inside of the enclosure.

2. A veterinary enclosure system according to claim 1 wherein:
a) the at least one attachment member is removably fixed to the veterinary enclosure system; and/or
b) wherein the or each attachment member comprises at least one hook; optionally, wherein the or each hook is L-shaped; and/or
c) wherein the or each attachment member comprises at least one hook and further comprises a detachable vertical support arm comprising a connector at a first end and a holder at a distal end thereof.

3. A veterinary enclosure system according to any preceding claim comprising at least one control panel; optionally, wherein the or each attachment member is attachable to the or each control panel.

4. A veterinary enclosure system according to any preceding claim wherein the or each attachment member comprises an elongate fastener, which is securable through a ventilation aperture, to the moveable door.

5. A veterinary enclosure system according to any preceding claim wherein the or each attachment member comprises a fastener and wherein the fastener is secured through the ventilation aperture to the moveable door by a securing means on the opposite face of the door to the accessory mounted thereon.

6. A veterinary enclosure system according to claim 4 or claim 5 wherein the fastener comprises a threaded bolt and a threaded nut.

7. A veterinary enclosure system according to any of claims 4 to 6 wherein the or each attachment member further comprises a pair of substantially annular rings, wherein each of the first and second substantially annular rings comprises a concentric circular aperture therein, and wherein the pair of substantially annular rings are removably connected by the fastener; optionally, wherein the first annular ring comprises a substantially cylindrical protrusion and/or the second annular ring comprises an annular protrusion.

8. A veterinary enclosure system according to any preceding claim wherein the or each attachment member further comprises an accessory holder; optionally, wherein the accessory holder comprises a clamp and/or the accessory holder comprises a cylindrical bar for supporting an infusion pump.

9. A veterinary enclosure system according to claim 8 wherein the accessory holder comprises a sealing sheet; optionally:
i) wherein the sealing sheet is a transparent acrylic sheet for sealing the or each ventilation hole of a door; and/or
ii) wherein the sealing sheet comprises three fixing apertures each positioned proximal to a corner of the sealing sheet.

10. A veterinary enclosure system according to claim 9 wherein the accessory holder comprises at least one pipe connector and/or at least one valve and/or a at least one pipe joint.

11. A veterinary enclosure system according to any of claims 3 to 10 wherein the or each control panel comprises any one or more of: a heating control for controlling the temperature within the housing; a lighting control for controlling the light emitted within the housing; a ventilation control for controlling the ventilation to the housing.

12. A veterinary enclosure system according to any of claims 3 to 11 comprising a plurality of animal housings and a plurality of control panels, wherein each control panel is configured to control conditions within a single housing.

13. A veterinary enclosure system according to any preceding claim wherein:
d) the or each housing and/or the or each door is made of toughened safety glass; and/or
e) the or each housing has a width of between about 600mm and 1200mm; and/or a depth of between about 500mm and 900mm; and/or a height of between about 400mm and 1100mm.

14. A veterinary enclosure system according to any preceding claim:
f) further comprising a removable divider; and/or
g) comprising at least one base plinth and a base further comprising at least four adjustable feet.

15. A veterinary enclosure system according to any preceding claim wherein the or each door is substantially rectangular and comprises one or more truncated corners.
